# EUROPÄISCHE PATENTANMELDUNG

(11) **EP 0 655 195 A1**
(43) Veröffentlichungstag der Anmeldung: **31.05.1995**
(21) Anmeldenummer: 93119122.5
(22) Anmeldetag: 26.11.1993
(51) Int. Cl.: A01N 1/00, A01M 17/00

(54) **Verfahren und Vorrichtung zur Schädlingsbekämpfung im Vorratsschutz oder in Verarbeitungsräumen**

(71) Anmelder: AUTOMATISCHE WALZENMÜHLE HEISS GmbH, D-74921 Helmstadt-Bargen (DE)
(72) Erfinder: Heiss, Dieter, D-74921 Heimstadt-Bargen (DE)
(74) Vertreter: Naumann, Ulrich, Dr.-Ing.

(57) **Zusammenfassung**

Ein Verfahren zur Schädlingsbekämpfung im Vorratsschutz und/oder in Verarbeitungsräumen, insbesondere zur Schädlingsbekämpfung bei der Lagerung und/oder Verarbeitung von Getreide, Reis, Erbsen, Mehl jeglicher Art, Kaffee, Kakao, Saatgut, Baumwolle, Kraftfutter, Tabak etc., weist folgende Verfahrensschritte auf: Der zu lagernde und zu behandelnde Vorrat wird in einen Raum (1) oder Verarbeitungsraum verbracht; die Raumtemperatur wird auf einen konstanten Wert im Bereich zwischen 45°C und 65°C eingestellt; die erhöhte Raumtemperatur wird über eine Dauer zwischen 12 und 48 Stunden gehalten. Eine Vorrichtung zur Durchführung des in Rede stehenden Verfahrens weist einen Raum (1) zur Lagerung des Vorrats bzw. einen Verarbeitungsraum zur Verarbeitung der Rohstoffe auf. Erfindungsgemäß ist eine den Raum (1) bzw. Verarbeitungsraum und somit den Vorrat bzw. die Rohstoffe beheizende Heizungsanlage (2) vorgesehen. Die Raumtemperatur wird auf einen konstanten Wert zwischen 45°C und 60°C eingestellt.

## Beschreibung

Die Erfindung betrifft ein Verfahren zur Schädlingsbekämpfung im Vorratsschutz oder in Verarbeitungsräumen, insbesondere zur Schädlingsbekämpfung bei der Lagerung von Getreide, Reis, Erbsen, Mehl jeglicher Art, Kaffee, Kakao, Saatgut, Baumwolle, Kraftfutter, Tabak etc. bzw. bei der Verarbeitung von Rohstoffen. Des weiteren betrifft die Erfindung eine Vorrichtung zur Schädlingsbekämpfung im Vorratsschutz bzw. in Verarbeitungsräumen, insbesondere zur Schädlingsbekämpfung bei der Lagerung bzw. Verarbeitung von Getreide, Reis, Erbsen, Mehl jeglicher Art, Kaffee, Kakao, Saatgut, Baumwolle, Kraftfutter, Tabak etc., vorzugsweise zur Durchführung des erfindungsgemäßen Verfahrens, mit einem Lagerraum zur Lagerung des Vorrats bzw. einem Verarbeitungsraum zur Verarbeitung der Rohstoffe.

Schädlingsbekämpfung im Vorratsschutz ist insbesondere bei langer Lagerung von Rohstoffen für Lebensmittel erforderlich. Bei den hier auftretenden Schädlingen handelt es sich in erster Linie um Schaben-, Käfer- und Mottenarten. Diese Schädlinge siedeln sich dort an, wo ihre Ansprüche hinsichtlich der Nahrung, der Wärme und der Feuchtigkeit in besonderem Maße erfüllt sind. An diese Orte gelangen die Schädlinge einerseits durch Wanderung, andererseits durch Einschleppung. Folglich sind solche Orte vom Schädlingsbefall besonders bedroht, an denen den Schädlingen gute Lebensbedingungen geboten werden und/oder an denen eine starke Ansammlung und Fluktuation an Menschen und/oder Waren stattfindet. Jedenfalls müssen die bei der Lagerung von Rohstoffen für Lebensmittel oder von Lebensmitteln auftretenden Schädlinge wiksam bekämpft werden, damit das Lagergut nicht verdirbt.

Bislang sind aus der Praxis zahlreiche Verfahren zur Schädlingsbekämpfung im Vorratsschutz bekannt. Diese bekannten Verfahren lassen sich hinsichtlich der dabei realisierten Methoden grundsätzlich unterteilen in drei unterschiedliche Verfahren, nämlich in
Schädlingsbekämpfungsverfahren unter Verwendung hochgiftiger Stoffe, wobei diese hochgiftigen Stoffe äußerst umweltbelastend sind (dabei unterscheidet man wiederum in Benetzungs- und Begasungsverfahren unter Verwendung von Räucher- und Vernebelungsmitteln),
biologische Schädlingsbekämpfungsverfahren, beispielsweise unter Verwendung von Kontaktinsektiziden und
natürliche Verfahren, nämlich die "kanadische Anfriermethode".

Im Rahmen der Schädlingsbekämpfungsverfahren unter Verwendung hochgiftiger Stoffe ist die Begasung mit Phosphor-Wasserstoff zu nennen. Dabei wird das Lagergut mit Aluminiumphosphid begast, welches mittels Luftsauerstoff und unterstützt durch Luftfeuchtigkeit Phosphor-Wasserstoff bildet. Dieses hochgiftige Gas belastet einerseits die Umwelt erheblich, wird andererseits bei ungewolltem Austreten aus dem Lagerraum für die im Umfeld des Lagerraums tätigen oder lebenden Personen gefährlich. Zur Reduzierung dieser Gefahr wurden bereits die Innenwände von Lagerräumen mit Spezialfolien ausgekleidet, was einerseits erhebliche Kosten verursacht, andererseits keinen vollständigen Schutz gegen das ungewollte Austreten giftiger Gase liefert.

Das biologische Schädlingsbekämpfungsverfahren ist ebenfalls unter dem Aspekt der Gesundheitsschädigung beim Menschen problematisch, ist darüberhinaus kostenintensiv und garantiert keinen sicheren Erfolg.

Als natürliches Verfahren ist bislang lediglich die sogenannte kanadische Anfriermethode bekannt. Hier erfolgt die Schädlingsbekämpfung mittels Kälte, was in Kanada zumindest im Winter unproblematisch ist. In unseren Breitengraden ist dieses Verfahren aufgrund des zur Kühlung erforderlichen hohen Energiebedarfs und des als Kältemittel erforderlichen Frigens zu aufwendig und damit zu teuer.

Des weiteren ist eine entsprechende Schädlingsbekämpfung bei der Herstellung von Produkten aus den zuvor gelagerten Rohstoffen erforderlich, damit die hergestellten Produkte schädlingsfrei und frei von Larven sind.

Aus der DE-PS 672 755 ist ein Verfahren zur Vernichtung von Getreide besiedelnden Schädlingen, namentlich von Kornkäfern, bekannt. Zu diesem Zweck wird das zu behandelnde Getreide vor dessen Lagerung in Silos oder auf Kornböden kurzzeitig, d.h. etwa zwei bis drei Minuten, in besonderen Behandlungskammern mit Heißluft, die eine Temperatur von 102°C aufweist, beaufschlagt. Diese Vorgehensweise geht auf die Tatsache zurück, daß eine aus dem dort zitierten Stand der Technik bekannte Temperatureinwirkung von beispielsweise 48,9°C über drei Stunden, 54,4°C über eine halbe Stunde bzw. 75°C bis 95°C über mehrere Stunden einerseits kostspielig ist, andererseits eine verhältnismäßig geringe Mortalitätsrate bei den Schädlingen mit sich bringt. Erst nach der Behandlung wird das Getreide in die eigentlichen Lager verbracht.

Auch aus der DE-PS 906 525 ist ein Verfahren zur Vernichtung von Ungezieferr und Krankheitserregern bekannt, wobei hier die zu behandelnden Gegenstäde, z.B. Kleider, mit den Ungeziefern und Krankheitserregern ebenfalls in besodneren Behandlungskammern einem Dampf, insbesondere einem Sattdampf, ausgesetzt werden. Die zu behandelnden Gegenstände können nicht nur mit Dampf, sondern zusätzlich noch mit Heißluft, möglicherweise abwechselnd, beaufschlagt werden, wodurch sich eine bessere und schnellere Wirkung erzielen lassen soll. Da bei dem bekannten Verfahren und der dabei einzusetzenden Vorrichtung hauptsächlich Dampf bzw. Sattdampf zur Vernichtung von Ungeziefer und Krankheitserregern eingesetzt wird, eignet sich dieses Verfahren keineswegs zur Behandlung von Lebensmitteln bzw. feuchtempfindlichen Materialien.

Der Erfindung liegt daher die Aufgabe zugrunde, ein Verfahren zur Schädlingsbekämpfung im Vorratsschutz und in Verarbeitungsräumen anzugeben, mit dem Schädlinge wirksam bekämpft werden können, ohne dabei die Umwelt zu belasten. Des weiteren soll eine entsprechende Vorrichtung angegeben werden.

Das erfindungsgemäße Verfahren löst die voranstehende Aufgabe durch die Merkmale des Patentanspruches 1.

Erfindungsgemäß ist erkannt worden, daß zur wirksamen Schädlingsbekämpfung im Vorratsschutz und in Verarbeitungsräumen, insbesondere zur Schädlingsbekämpfung bei der Lagerung und/oder Verarbeitung von Getreide, Reis, Erbsen, Mehl jeglicher Art, Kaffee, Kakao, Saatgut, Baumwolle, Kraftfutter, Tabak etc., folgende Verfahrensschritte erforderlich sind: Zunächst wird der zu lagernde, zu verarbeitende und zu behandelnde Vorrat in einen Raum verbracht. Anschließend wird die Raumtemperatur auf einen konstanten Wert im Bereich zwischen 50°C und 65°C eingestellt. Die erhöhte Raumtemperatur wird über eine vorgebbare Dauer gehalten, die derart zu bemessen ist, daß sich die gewünschte Mortalität einstellt, wobei die Mortalitätsrate während der Anwendung des Verfahrens überprüft werden kann. Anschließend läßt man die Raumtemperatur von der zum Erreichen der Mortalität eingestellten Verfahrenstemperatur wieder auf natürliche Weise abkühlen, nämlich auf den Ursprungswert.

Entgegen einem erheblichen Vorurteil der Fachwelt erfolgt die Schädlingsbekämpfung erfindungsgemäß mittels Wärme. Dieses Verfahren steht im Widerspruch zu allen einschlägigen Lehrmeinungen, zumal bei Temperaturen etwa oberhalb 65°C eine Eiweißschädigung eintritt, das Vorratsgut also verderben würde. Erfindungsgemäß hat sich aber gezeigt, daß der Temperaturbereich bis 65°C vollkommen ausreicht, um eine wirksame Schädlingsbekämpfung durchzuführen. Durch die erhöhte Temperatur und das daraus resultierende Austrocknen wird vermutlich das Vermehrungsverhalten der Schädlinge negativ beeinflußt, so daß erfindungsgemäß behandelte Vorräte überhaupt keine Schädlingspopulation mehr aufweisen. Ferner ist das erfindungsgemäße Verfahren absolut umweltverträglich.

Hinsichtlich einer optimalen Verfahrensdauer ist es von Vorteil, die Verfahrenstemperatur über einen Zeitraum zwischen 10 und 50 Stunden, vorzugsweise zwischen 12 und 16 Stunden zu halten, wobei die Verfahrensdauer letztendlich von der Größe des Raumenes und der Anzahl der abzutötenden Schädlinge abhängt.

Des weiteren könnte es von ganz besonderem Vorteil sein, wenn vor dem Erwärmen der Raumtemperatur auf die eigentliche Verfahrenstemperatur eine Abkühlung der Raumtemperatur stattfindet. Eine danach schnellstmöglich durchzuführende Temperaturerhöhung auf die Verfahrenstemperatur, d.h. auf etwa 55°C, sorgt in Verbindung mit der vorangegangenen Abkühlung für eine optimale Mortalität, wobei möglicherweise aufgrund der vorangegangenen Temperaturerniedrigung gewisse Temperaturresistenzen aufgrund allmählicher Anpassung überwunden sind. Wesentlich ist jedenfalls, daß die vor der eigentlichen Temperaturerhöhung stattfindende Temperaturerniedrigung nicht zwingend erforderlich ist, jedoch das Verfahren begünstigen kann.

Hinsichtlich des erfindungsgemäßen Verfahrens ist es besonders vorteilhaft, wenn der Raum geschlossen, aber nicht abgedichtet ist. Die geschlossene Ausführung ist bereits aus energetischen Gründen zu bevorzugen. Eine abgedichtete Lagerung oder Verarbeitung würde die "Atmung" verhindern, wodurch Probleme hinsichtlich einer Kondensbildung oder hinsichtlich eines Schimmelbefalls auftreten könnten. Im übrigen wäre eine abgedichtete Lagerung bzw. Verarbeitung äußerst kostenaufwendig.

Hinsichtlich der schädlingsbekämpfenden Wirkung und hinsichtlich der Vermeidung einer Schädigung des Lagergutes durch Eiweißveränderungen hat es sich herausgestellt, daß es besonders vorteilhaft ist, die Raumtemperatur auf etwa 55°C einzustellen. Des weiteren hat sich herausgestellt, daß dabei eine Wärmebehandlungsdauer von 12 Stunden bereits ausreicht, die Schädlingspopulation auszurotten.

Damit die erwärmte Luft stets gleichmäßig im Raum verteilt ist, wird in besonders vorteilhafter Weise die erwärmte Luft im Raum ständig umgewälzt. Je besser die Umwälzunge, desto wirksamer ist die Temperaturbehandlung, da nämlich die stets vorhandene Luftströmung auch eine Erwärmung in Zwischenräumen zwischen dem Lagergut schnellstens ermöglicht.

Aufgrund der Tatsache, daß das Vermehrungsverhalten vermutlich durch Austrocknen beeinflußt wird, wird dem Raum in vorteilhafter Weise ständig Luftfeuchtigkeit entzogen. In weiter vorteilhafter Weise könnte die Luftfeuchtigkeit im Raum derart geregelt werden, daß das Lagergut nicht austrocknet. Korrelationen zwischen relativer Luftfeuchtigkeit der Umgebungsluft und Feuchtigkeit innerhalb eines Festkörpers sind hinlänglich bekannt.

Die voranstehende Aufgabe wird hinsichtlich einer entsprechenden Vorrichtung durch die Merkmale des Patentanspruches 7 gelöst. Danach ist zur Schädlingsbekämpfung im Vorratsschutz bzw. in Verarbeitungsräumen, insbesondere zur Schädlingsbekämpfung bei der Lagerung bzw. Verarbeitung von Getreide, Reis, Erbsen, Mehl jeglicher Art, Kaffee, Kakao, Saatgut, Baumwolle, Kraftfutter, Tabak etc., vorzugsweise zur Durchführung des Verfahrens nach einem der Ansprüche 1 bis 6, ein besonderer Raum zur Lagerung des Vorrats bzw. Verarbeitungsraum zur Verarbeitung der Rohstoffe vorgesehen. Zu der erfindungsgemäßen Vorrichtung gehört eine den Raum und somit den Vorrat beheizende Heizungsanlage. Die Raumtemperatur ist dabei auf einen konstanten Wert zwischen 50°C und 65°C einstellbar.

In vorteilhafter Weise ist der Raum in sich abgeschlossen, bildet demnach eine zumindest weitgehend isolierte Einheit.

Insbesondere zur vielseitigen Anwendung einerseits des erfindungsgemäßen Verfahrens und andererseits der erfindungsgemäßen Vorrichtung ist es von ganz besonderem Vorteil, wenn der Raum mobil ausgeführt ist. Dazu könnte er als mobiler Container ausgeführt sein. Folglich könnte man zur Anwendung des erfindungsgemäßen Verfahrens fahrbare Gerätschaften bereitstellen, die in üblichen Lagerräumen zur Anwendung kommen.

Der zuvor bereits erörterte Raum ist nach einer bevorzugten Ausführungsform in mindestens zwei Lagerkammern bzw. in mindestens zwei Lageretagen unterteilt, wodurch die gleichzeitige Behandlung unterschiedlicher Lagergüter möglich ist. Dies gilt gleichermaßen für einen stationären wie auch für einen mobilen Raum der in Rede stehenden Art.

Hinsichtlich einer gleichmäßigen Temperaturverteilung im Raum ist es von Vorteil, wenn die Heizungsanlage ein Heizaggregat und mindestens einen Lüfter zur Umwälzung der erwärmten Luft aufweist. Zumindest das Heizaggregat der Heizungsanlage könnte vorzugsweise fest in einem weiteren Container angeordnet sein. Auch hier wäre eine ganz besondere Mobilität gewährleistet. Dem Lüfter könnte ein Konvektor zugeordnet sein.

Im Rahmen einer hohen Energieausbeute weist die Heizungsanlage in besonders vorteilhafter Weise einen Generator zur Erzeugung von Strom für den oder die Lüfter auf. Der Generator dient dann als Heizaggregat, so daß die Abwärme des Generators zum Aufheizen der Raumluft verwendet werden kann. Die Abwärme des Generators wird einem Hauptwärmetauscher und nach dem Wärmetausch aufgewärmtes Strömungsmedium dem Lüfter bzw. den Lüftern, d.h. den den Lüftern zugeordneten Konvektoren, zugeführt.

Bei der Abwärme des Generators kann es sich sowohl um Abwärme aus dem Kühlwasser des Generators als auch um Abwärme aus dem Abgas des Generators handeln. Im Falle einer Nutzung der Abwärme aus dem Abgas des Generators wird das Abgas über einen Rußfilter, durch einen Abgaswärmetauscher hindurch, zu einem Abgaskamin geleitet. Vom Abgaswärmetauscher aus wird ein die Wärme enthaltendes Strömungsmedium direkt den den Lüftern zugeordneten Konvektoren zugeführt.

Zur Überwachung und Temperatursteuerung der erfindungsgemäßen Vorrichtung kann in besonders vorteilhafter Weise im Kühlwasserkreislauf zwischen dem Hauptwärmetauscher und dem Generator ein Regelthermostat zur Detektion der Wassertemperatur des vom Generator her strömenden Kühlwassers vorgesehen sein. Ebenso können im Kühlwasserkreislauf zwischen dem Hauptwärmetauscher und dem Generator mindestens zwei Regelthermostate zur Detektion der Wassertemperatur des Kühlwassers vorgesehen sein, wobei dann einer der Thermostate im Kühlwasservorlauf und ein anderer Thermostat im Kühlwasserrücklauf angeordnet wäre. Ebenso könnte in der zum Rußfilter bzw. zum Abgaswärmetauscher führenden Abgasleitung ein Regelthermostat zur Detektion der Abgaswärme vorgesehen sein.

Bei dem Generator könnte es sich um ein Dieselaggregat oder auch um ein Gasaggregat handeln. Der Generator und der Hauptwärmespeicher könnten außerhalb des Raums und der Lüfter mit dem Konvektor jeweils innerhalb des Raums angeordnet sein. Der Lüfter mit dem Konvektor ist in vorteilhafter Weise jeweils in dem Raum aufgehängt.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 7 nachgeordneten Ansprüche, andererseits auf die nachfolgende Erläuterung zweier Ausführungsbeispiele der Erfindung anhand der Zeichnung zu verweisen. In Verbindung mit der Erläuterung des bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung ein erstes Ausführungsbeispiel einer erfindungsgemäßen Vorrichtung, wobei es sich nachfolgend beispielhaft um die Schädlingsbekämpfung im Vorratsschutz handelt und
- Fig. 2: in einer schematischen Darstellung ein zweites Ausführungsbeispiel einer erfindungsgemäßen Vorrichtung, wobei die Vorrichtung hier mobil ausgeführt ist.

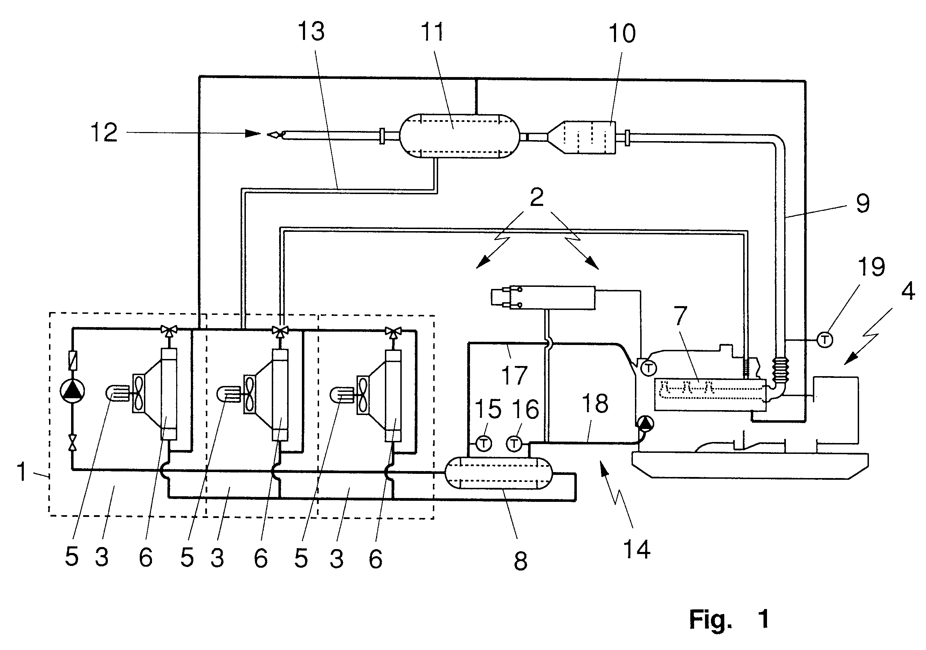

Gemäß der Darstellung in Fig. 1 ist der Raum 1 zur Lagerung des Vorrats lediglich angedeutet. Erfindungsgemäß ist eine den Raum 1 und somit den Vorrat beheizende Heizungsanlage 2 vorgesehen. Die Raumtemperatur ist mittels der Heizungsanlage 2 auf einen konstanten Wert zwischen 50°C und 65°C einstellbar.

In Fig. 1 ist des weiteren angedeutet, daß der Raum 1 in drei Lagerkammern oder Lageretagen 3 unterteilt ist. Die Heizungsanlage 2 weist ein Heizaggregat 4 und mindestens einen Lüfter 5 zur Umwälzung der erwärmten Luft auf. Dem Lüfter 5 ist ein Konvektor 6 zugeordnet.

Die Heizungsanlage 2 weist einen Generator 7 zur Erzeugung von Strom für die Lüfter 5 auf. Der Generator 7 dient als Heizaggregat 4, so daß die Abwärme des Generators 7 zum Aufheizen der Raumluft verwendet werden kann. Im übrigen liefert der Generator den zum Betreiben der Lüfter 5 erforderlichen Strom. Die Abwärme des Generators 7 wird einem Hauptwärmetauscher 8 zugeführt. Nach dem Wärmetausch wird aufgewärmtes Strömungsmedium den Lüftern 5, d.h. den den Lüftern 5 zugeordneten Konvektoren 6 zugeführt.

Bei der Abwärme des Generators 7 handelt es sich sowohl um Abwärme aus dem Kühlwasser des Generators 7 als auch um Abwärme aus dem Abgas des Generators 7. Das Abgas des Generators 7 wird über eine Abgasleitung 9 einem Rußfilter 10 zugeführt. Durch einen Abgaswärmetauscher 11 hindurch gelangt das Abgas schließlich zu einem Abgaskamin 12. Vom Abgaswärmetauscher 11 aus wird ein die Wärme enthaltendes Strömungsmedium über Leitung 13 direkt den den Lüftern 5 zugeordneten Konvektoren 6 zugeführt.

Zur Überwachung und Temperatursteuerung im Kühlwasserkreislauf 14 zwischen dem Hauptwärmetauscher 8 und dem Generator 7 sind zwei Regelthermostate 15, 16 zur Detektion der Wassertemperatur des Kühlwassers vorgesehen. Einer der Thermostate 15, 16 ist im Kühlwasservorlauf 17, ein anderer im Kühlwasserrücklauf 18 angeordnet. Auch in der zum Rußfilter 10 bzw. zum Abgaswärmetauscher 11 führenden Abgasleitung 9 ist ein Regelthermostat 19 zur Detektion der Abgaswärme vorgesehen.

Der Generator 7 ist als Dieselaggregat ausgeführt. Er kann gemeinsam mit dem Hauptwärmetauscher 8 außerhalb des Raumes 1 vorgesehen sein. Die Lüfter 5 mit den Konvektoren 6 sind jedenfalls innerhalb der jeweiligen Lagerkammern 3 angeordnet bzw. dort aufgehängt.

Im Falle der Realisierung der erfindungsgemäßen Lehre in Verarbeitungsräumen ist wesentlich, daß die aus den Rohstoffen hergestellten Fertigprodukte schädlingsfrei und frei von Larveneiern sind. Bei einer solchen Anwendung wird der bislang übliche Aufwand an Arbeit bei der manuellen Desinfektion der Verarbeitungsmaschinen erheblich reduziert. Wiederholte Schädlingsbekämpfung ist erfindungsgemäß kurzfristig vollziehbar - und dies ohne behördliche Genehmigungsverfahren, die aufgrund strenger werdender Bestimmungen im übrigen immer schwerer oder demnächst gar nicht mehr durchzusetzen sind.

Ein weiterer Vorteil des erfindungsgemäßen Verfahrens beim Einsatz in Verarbeitungsräumen liegt auch darin, daß nunmehr auch in gemischt-genutzten Gebieten oder gar in Wohngebieten eine wirksame Schädlingsbekämpfung möglich ist, ohne eine genehmigungspflichtige Begasung durchzuführen.

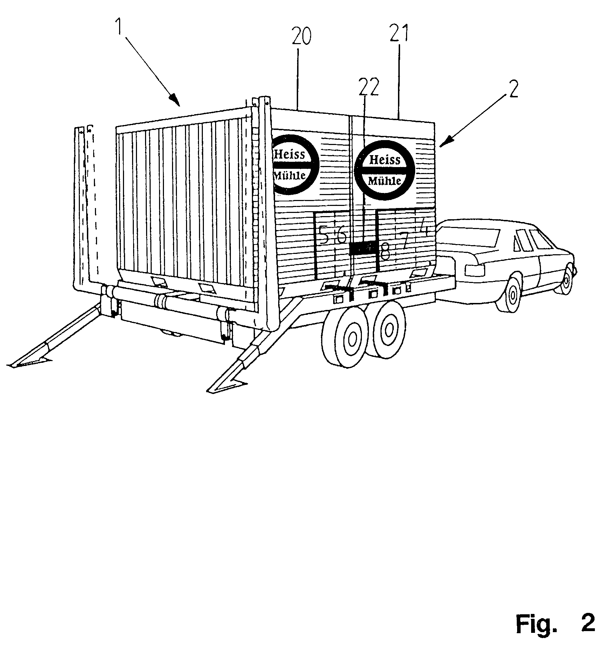

Gemäß der Darstellung in Fig. 2 handelt es sich bei dem zur Wärmebehandlung dienenden Raum 1 um einem mobilen Raum 1, genauer gesagt um einen mobilen Container 20. In diesen Container 20 ist das zu behandelnde Lagergut verbringbar, wobei dort die Konvektoren 6 sowie die Lüfter 5 angeordnet sind. Letztendlich handelt es sich hier um eine fahrbare Einheit, die im Rahmen einer mobilen Serviceeinrichtung zu dem zu behandelnden Lagergut verbracht werden kann.

Fig. 2 zeigt des weiteren deutlich, daß auch die gesamte Heizungsanlage 2 mobil ausgeführt ist, daß nämlich das Heizaggregat 4, der Generator 7 und der Hauptwärmetauscher 8 innerhalb eines zweiten Containers 21 angeordnet sind. Bei diesem Container 21 handelt es sich demnach um einem Versorgungscontainer, der den zur eigentlichen Behandlung dienenden Container 20 über eine vorzugsweise einen Vor- und Rücklauf aufweisende Verbindungsleitung 22 mit Heizmedium versorgt.

Die die wesentlichen Komponenten der erfindungsgemäßen Vorrichtung aufweisenden Container 20 und 21 bilden aufgrund ihrer Mobilität die Möglichkeit, das erfindungsgemäße Verfahren durch mobile Einrichtungen anzuwenden. Ohne weiteres ist es auch denkbar, den zur Wärmebehandlung dienenden Container 20 an ein Fernwärmenetz anzuschließen, so daß der Konvektor 6 direkt aus dem Netz mit Heizmedium versorgt wird.

Abschließend sei darauf hingewiesen, daß der Kern der vorliegenden Erfindung - Schädlingsbekämpfung im Vorratsschutz oder in Verarbeitungsräumen mittels Wärme - in Vorratsräumen und Vorratsbehältern jeglicher Art sowie in Verarbeitungsräumen und auch privaten Wohnräumen realisierbar ist und auch nicht auf die voranstehend beispielhaft genannten Vorratsgüter bzw. Rohstoffe beschränkt ist.

## Patentansprüche

1. Verfahren zur Schädlingsbekämpfung im Vorratsschutz oder in Verarbeitungsräumen, insbesondere zur Schädlingsbekämpfung bei der Lagerung und/oder Verarbeitung von Getreide, Reis, Erbsen, Mehl jeglicher Art, Kaffee, Kakao, Saatgut, Baumwolle, Kraftfutter, Tabak etc., **gekennzeichnet durch** folgende Verfahrensschritte:
Verbringen des zu lagernden und/oder zu verarbeitenden und zu behandelnden Vorrats in einen Raum (1) oder Verarbeitungsraum;
Einstellen der Raum- bzw. Verfahrenstemperatur auf einen vorzugsweise konstanten Wert im Bereich zwischen 50°C und 65°C, vorzugsweise auf 55°C, wobei die Raumtemperatur schnellstmöglich erreicht wird;
Halten der erhöhten Raumtemperatur über eine zum Erreichen der gewünschten Mortalität erforderliche Zeitdauer, wobei die Mortalitätsrate ggf. überprüft wird;
natürliches Abkühlen der Raumtemperatur auf den Ursprungswert.

2. Verfahren nach Anspruch 1, dadurch gekennzeichnet, daß die Verfahrenstemperatur über eine Dauer zwischen 10 und 50 Stunden, vorzugsweise zwischen 12 und 16 Stunden, gehalten wird.

3. Verfahren nach Anspruch 1 oder 2, dadurch gekennzeichnet, daß vor dem Erwärmen der Raumtemperatur auf die eigentliche Verfahrenstemperatur eine Abkühlung der Raumtemperatur stattfindet.

4. Verfahren nach einem der Ansprüche 1 bis 3, dadurch gekennzeichnet, daß der Raum (1) oder Verarbeitungsraum geschlossen, aber nicht abgedichtet ist.

5. Verfahren nach einem der Ansprüche 1 bis 4, dadurch gekennzeichnet, daß die erwärmte Luft im Raum (1) oder Verarbeitungsraum ständig umgewälzt wird.

6. Verfahren nach einem der Ansprüche 1 bis 5, dadurch gekennzeichnet, daß dem Raum (1) oder Verarbeitungsraum ständig Luftfeuchtigkeit entzogen wird oder daß die Luftfeuchtigkeit im Raum (1) bzw. Verarbeitungsraum derart geregelt wird, daß das Lagergut nicht austrocknet.

7. Vorrichtung zur Schädlingsbekämpfung im Vorratsschutz und/oder in Verarbeitungsräumen, insbesondere zur Schädlingsbekämpfung bei der Lagerung und/oder Verarbeitung von Getreide, Reis, Erbsen, Mehl jeglicher Art, Kaffee, Kakao, Saatgut, Baumwolle, Kraftfutter, Tabak etc., vorzugsweise zur Durchführung des Verfahrens nach einem der Ansprüche 1 bis 6, mit einem Raum (1) zur Lagerung und ggf. auch zur Verarbeitung von Vorrat bzw. Rohstoffen,
**dadurch gekennzeichnet**, daß eine den Raum (1) beheizende Heizungsanlage (2) vorgesehen und die Raumtemperatur zwischen 50°C und 65°C einstellbar ist.

8. Vorrichtung nach Anspruch 7, dadurch gekennzeichnet, daß es sich bei dem Raum (1) um einen abgeschlossenen Raum handelt.

9. Vorrichtung nach Anspruch 7 oder 8, dadurch gekennzeichnet, daß der Raum (1) mobil, insbesondere als mobiler Container (20) ausgeführt ist.

10. Vorrichtung nach Anspruch 7 oder 8, dadurch gekennzeichnet, daß der Raum (1) stationär als Lager- oder Verarbeitungsraum ausgeführt ist.

11. Vorrichtung nach einem der Ansprüche 9 bis 13, dadurch gekennzeichnet, daß der Raum (1) in mindestens zwei Lagerkammern oder in mindestens zwei Lageretagen (3) unterteilt ist.

12. Vorrichtung nach einem der Ansprüche 7 bis 11, dadurch gekennzeichnet, daß die Heizungsanlage (2) ein Heizaggregat (4) und mindestens einen Lüfter (5) zur Umwälzung der erwärmten Luft aufweist.

13. Vorrichtung nach einem der Ansprüche 7 bis 12, dadurch gekennzeichnet, daß die Heizungsanlage (2) mobil ausgeführt ist und daß zumindest das Heizaggregat (4) der Heizungsanlage (2) vorzugsweise fest in einem Container (21) angeordnet ist.

14. Vorrichtung nach Anspruch 12 und ggf. Anspruch 13, dadurch gekennzeichnet, daß dem Lüfter (5) ein Konvektor (6) zugeordnet ist und daß ggf. der Lüfter (5) und der Konvektor (6) beweglich ausgeführt und in den Raum (1) einbringbar sind.

15. Vorrichtung nach einem der Ansprüche 9 bis 14, dadurch gekennzeichnet, daß die Heizungsanlage (2) einen vorzugsweise als Dieselaggregat oder Gasaggregat ausgeführten Generator (7) zur Erzeugung von Strom für den oder die Lüfter (5) aufweist, daß der Generator (7) als Heizaggregat (4) dient, daß nämlich die Abwärme des Generators (7) zum Aufheizen der Raumluft verwendet wird, daß ggf. die Abwärme des Generators (7) einem Hauptwärmetauscher (8) zugeführt wird und daß nach dem Wärmetausch aufgewärmtes Strömungsmedium dem Lüfter (5) bzw. den Lüftern (5), d.h. den den Lüftern (5) zugeordneten Konvektoren (6) zugeführt wird, wobei es sich bei der Abwärme des Generators (7) sowohl um Abwärme aus dem Kühlwasser des Generators (7) als auch um Abwärme aus dem Abgas des Generators (7) handeln kann.

16. Vorrichtung nach Anspruch 15, dadurch gekennzeichnet, daß das Abgas des Generators (7) über einen Rußfilter (10), durch einen Abgaswärmetauscher (11) hindurch, zu einem Abgaskamin (12) geleitet wird und daß vom Abgaswärmetauscher (11) aus ein die Wärme enthaltendes Strömungsmedium direkt den den Lüftern (5) zugeordneten Konvektoren (6) zugeführt wird und daß ggf. in der zum Rußfilter (10) bzw. zum Abgaswärmetauscher (11) führenden Abgasleitung (9) ein Regelthermostat (19) zur Detektion der Abgaswärme vorgesehen ist.

17. Vorrichtung nach Anspruch 15 und ggf. nach Anspruch 16, dadurch gekennzeichnet, daß zur Überwachung und Temperatursteuerung im Kühlwasserkreislauf (14) zwischen dem Hauptwärmetauscher (8) und dem Generator (7) mindestens ein Regelthermostat (15 oder 16) zur Detektion der Wassertemperatur des vom Generator (7) her strömenden Kühlwassers vorgesehen ist oder daß im Kühlwasserkreislauf (14) zwischen dem Hauptwärmetauscher (8) und dem Generator (7) mindestens zwei Regelthermostate (15, 16) zur Detektion der Wassertemperatur des Kühlwassers vorgesehen sind, wobei einer der Thermostate (15, 16) im Kühlwasservorlauf (17), ein anderer im Kühlwasserrücklauf (18) angeordnet ist.

18. Vorrichtung nach einem der Ansprüche 15 bis 17, dadurch gekennzeichnet, daß der Generator (7) und der Hauptwärmespeicher (8) außerhalb des Raumes (1), vorzugsweise in einem Container, und der Lüfter (5) mit dem Konvektor (6) jeweils innerhalb des Raumes (1) bzw. des Verarbeitungsraumes angeordnet sind und daß der Lüfter (5) mit dem Konvektor (6) jeweils in dem Raum bzw. Verarbeitungsraum (1) aufgehängt ist bzw. wird.
